# EUROPÄISCHE PATENTSCHRIFT

(11) **EP 0 863 483 B1**
(45) Veröffentlichungstag und Bekanntmachung des Hinweises auf die Patenterteilung: **12.10.2005**
(21) Anmeldenummer: 98103914.2
(22) Anmeldetag: 05.03.1998
(51) Int. Cl.: G06K 19/08, G06K 17/00, G06K 5/02

(54) **Anlage zur Bearbeitung von Chip- und/oder Magnetstreifenkarten**
Arrangement for processing chip and/or magnetic cards
Installation pour le traitement de cartes à puce et/ou magnétiques

(30) Priorität: 08.03.1997 DE 19709599
(43) Veröffentlichungstag der Anmeldung: 09.09.1998
(73) Patentinhaber: BÖWE CARDTEC GmbH, 33106 Paderborn (DE)
(72) Erfinder: Meyer-Wittreck, Udo, 33397 Rietberg (DE); Krupke, Frank, 59494 Soest (DE); Rübbelke, Hermann, 33129 Delbrück (DE); Röbke, Steffen, 33098 Paderborn (DE); Banse, Reinhard, 33106 Paderborn (DE)
(74) Vertreter: Hanewinkel, Lorenz

(56) Entgegenhaltungen:
- EP-A- 0 251 637
- EP-A- 0 266 926
- WO-A-94/21460
- DE-A- 4 000 670
- DE-A- 4 235 470
- US-A- 5 151 582
- PATENT ABSTRACTS OF JAPAN vol. 015, no. 192 (P-1202), 17. Mai 1991 (1991-05-17) & JP 03 046066 A (HITACHI LTD), 27. Februar 1991 (1991-02-27)

## Beschreibung

Die Erfindung bezieht sich auf eine Anlage zur Bearbeitung von Chip- und/oder Magnetstreifenkarten gemäß dem Oberbegriff des Anspruchs 1.

Eine derartige Vorrichtung ist aus der WO 94/21460 bekannt. In dieser werden Kreditkarten mit einer Prägeschrift versehen und in einer anschließenden Lesestation auf die Korrektheit der Prägung geprüft. Inkorrekte Karten werden aussortiert und nur die korrekt geprägten Karten werden weiterverarbeitet, indem sie z.B. auf einem Träger aufgebracht werden. Weiterhin wird ein Magnetstreifen auf der Karte gelesen und zwischen der geprägten und der gelesenen Information ein Abgleich durchgeführt und bei fehlender Übereinstimmung eine Aussortierung vorgenommen.

Diese Vorrichtung eignet sich nur zum Lesen von der bekanntlich groben Prägeschrift, nicht aber für gelaserte Schriftzeichen, insbesondere Miniatur-Sicherheitsschriftzeichen.

Weiterhin ist aus der US 5 151 582 A eine Lesevorrichtung für geprägte Kreditkarten, die einen Magnetstreifen tragen, bekannt, bei der die Karte mit einem Rollenantrieb an einer schmalen Lichtzeile vorbeigeführt wird, die die erhabene Schrift unter einem gegen die Kartenoberfläche geneigten Winkel beleuchtet, wobei unter einem spiegelbildlichen Winkel eine Leseelementzeile angeordnet ist, deren Lesesignale zur Zeichenerkennung und zur Ermittlung von gedruckten Kennzeichen ausgewertet werden. Die gelesenen Informationen werden mit von einem Magnetkopf gelesenen Magnetstreifeninformationen abgeglichen, und ein positiver bzw. negativer Abgleich wird signalisiert und zur Verhinderung von Mißbrauch ausgewertet.

Mit einer derartigen Anlage werden einerseits karten-/benutzerspezifische Daten auf den Chip (Halbleiterbaustein) und/oder den Magnetstreifen aufgezeichnet und andererseits karten-/benutzerspezifische Daten auf den Kartenkörper aufgebracht. Hierzu weist eine solche Anlage eine Chip- und/oder Magnetstreifen-Bearbeitungsstation, in der die Chip und ggf. die Magnetstreifen-Bearbeitung in bekannter Weise integriert ist, und eine Kartenkörper-Bearbeitungsstation auf Während die auf den Chip bzw. den Magnetstreifen aufgezeichneten Daten in der Regel änderbar sind, da die entsprechenden Speichermedien mehrfach beschreibbar sind, sind die auf den Kartenkörper aufgebrachten Daten nicht änderbar. Die nicht änderbaren Daten werden beispielsweise durch Laserbeschriftung, Thermotransferdruck oder durch Prägen (Embossing) auf den Kartenkörper aufgebracht. Das Format dieser Karten ist durch internationale Normen standardisiert (siehe ISO 7810).

Weiterhin ist eine Anlage aus der DE 30 49 607 bekannt, wobei die Karten, welche aus einem die zu bearbeitenden Karten enthaltenden Kartenvorratsmagazin entnommen werden, nacheinander erst die Chip- und/oder Magnetstreifen-Bearbeitungsstation, wo die änderbaren Daten aufgezeichnet werden, und dann die Kartenkörper-Bearbeitungsstation durchlaufen, wo die nicht änderbaren sichtbaren Daten (alphanumerische Zeichen, Barcode, Photo, Hochprägung) aufgebracht werden. Dabei wird nach dem Aufzeichnen der Daten auf den Chip- und/oder Magnetstreifen überprüft, ob die Aufzeichnung ordnungsgemäß erfolgt ist. Dies kann in der Chip- und/oder Magnetstreifen-Bearbeitungsstation oder in einer separaten Kontrollstation erfolgen. Karten, bei denen die Datenaufzeichnung auf den Chip- und/oder Magnetstreifen nicht ordnungsgemäß erfolgte, werden der Kartenkörper-Bearbeitungsstation, wo die nicht änderbaren Daten aufgezeichnet werden, nicht mehr zugeführt. Diese Karten werden ausgesondert. Allerdings werden bei dieser Anlage Karten, bei denen in der Kartenkörper-Bearbeitungsstation die aufzubringenden Daten falsch oder nur mangelhaft aufgezeichnet wurden, nicht aussortiert. Dies hat zur Folge, daß bei der automatischen Versandverpackung der Karten zur Versendung an die Kunden oder Kartendistributoren auch die Karten mit falsch oder mangelhaft aufgebrachten Daten verschickt werden.

Aufgabe der Erfindung ist es, den Mangel der eingangs genannten Anlage zu beheben.

Diese Aufgabe wird durch die Merkmale des Patentanspruches 1 gelöst. Die sich daran anschließenden Unteransprüche enthalten vorteilhafte und förderliche Ausgestaltungen der Erfindung.

Auf den beigefügten Zeichnungen werden die erfindungsgemäße Anlage näher beschrieben und die Vorteile erläutert. Es zeigt:
- Fig.1: eine perspektivische Ansicht der Anlage,
- Fig.2: eine Seitenansicht der Anlage,
- Fig.3: eine schematische Ansicht der Anlagekomponenten in der Draufsicht,

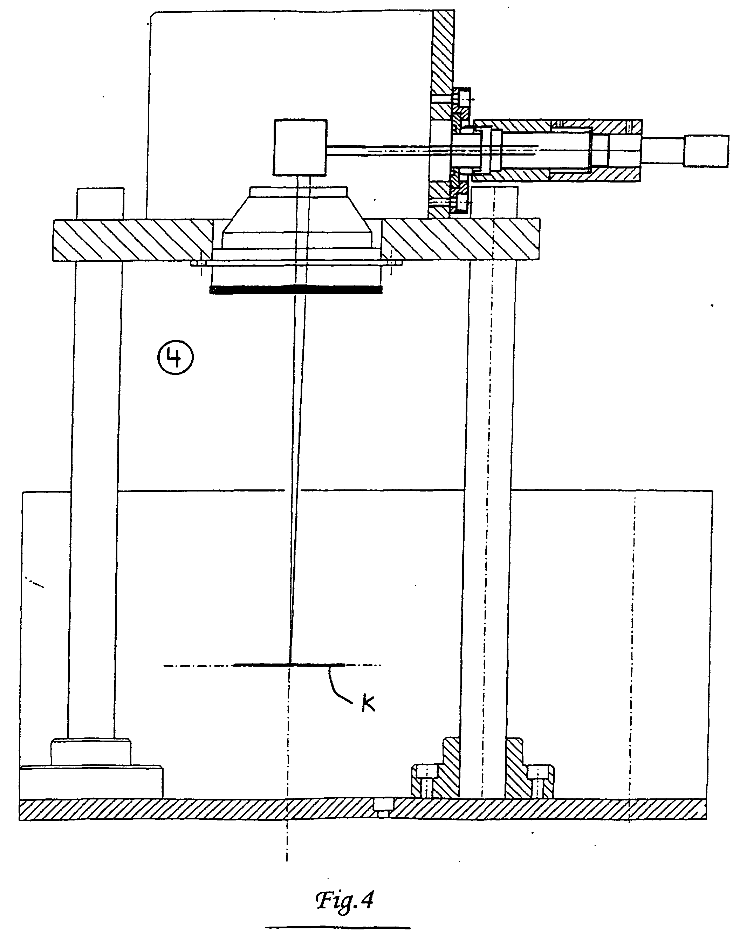

- Fig.4: eine schematische Ansicht einer Laserbeschriftungstation,
- Fig.5: eine schematische Ansicht der optischen Erkennungsstation,
- Fig.6: eine Draufsicht der zur optischen Erkennungstation gehörenden Kartentransport-und Positioniervorrichtung,
- Fig.7: eine Seitenansicht der zur optischen Erkennungsstation gehörenden Kartentransport-und Positioniervorrichtung zur Verdeutlichung der Wendeoption,
- Fig.8: eine schematische Ansicht einer Laserbeschriftungsstation mit integrierter optischer Erkennungseinrichtung.

Die Anlage weist eine optische Erkennungsstation (5) mit Auswerteeinheit, vorzugweise eine CCD-Kamera (50) mit Bildauswerteeinrichtung (Computer mit Bildverarbeitungsprogramm) zur Überprüfung der Richtigkeit und/oder Qualität der in der Kartenkörper-Bearbeitungsstation (4) aufgebrachten Daten auf. In dem dargestellten Ausführungsbeispiel der Anlage wird die Kartenkörper-Bearbeitungsstation (4) von einer Laserbeschriftungsstation gebildet. Dabei werden karten-/benutzerspezifische Daten in Form von alphanumerischen Zeichen (z.B. Hans Mustermann, Kontonr.: 23481936), einem Barcode oder einem Photo auf den Kartenkörper gelasert. Dabei können die Daten nur auf die Kartenvorderseite, nur auf die Kartenrückseite oder sowohl auf die Vorderseite wie auch auf die Rückseite gelasert werden; oder aber ein Teil der Daten wird auf die Vorderseite und der andere Teil auf die Rückseite gelasert. Mit Hilfe der Kamera (50) wird ein Bild der jeweiligen Kartenseite (K12,K2) aufgenommen und dann mit Hilfe eines in einem Computer installierten Bildverabeitungsprogrammes ausgewertet. Die Auswertung umfaßt eine Zeichen-/Mustererkennung. Nach der Auswertung wird durch Vergleich der aufgelaserten Daten mit dem zu dieser Karte (K) gehörenden Datensatz überprüft, ob die aufgelaserten Daten den Daten des Datensatzes entsprechen. Weiterhin kann überprüft werden, ob die Daten an der richtigen Position auf der Karte aufgelasert wurden und ob die Größe von Buchstaben/Zahlen sowie die "Strichstärke" den Vorgaben entspricht. Auch andere Qualitätsmerkmale der Laserbeschriftung wie Kontrast oder Kantenschärfe können überprüft werden. Darüber hinaus ist es auch möglich, Daten oder Logos, die auf die metallischen Kontaktflächen der Chipkarte (K) gelasert wurden, zu überprüfen.

Karten mit falsch aufgelaserten Daten (z.B. falscher Name, falsche Kartennummer etc.) werden auf jeden Fall ausgesondert. Hinsichtlich der anderen Qualitätsmerkmale, z.B. Kontrast oder Kantenschärfe, können Ausschlußkritierien mit bestimmten Toleranzbereichen definiert werden. Mit der erfindungsgemäßen Anlage wird verhindert, daß Karten mit falsch oder mangelhaft (sprich z.B. schlecht leserlich) aufgelaserten Daten an den Kunden ausgeliefert werden. Die optische Erkennung ist nicht auf die Überprüfung von Laserbeschriftungen beschränkt. Ebenso können beispielsweise im Thermotransfer- oder im Thermosublimationsdruck oder im Hochprägeverfahren aufgebrachte Daten überprüft werden. Auch Farbcharakteristika können Teil der Überüfungskritierien sein.

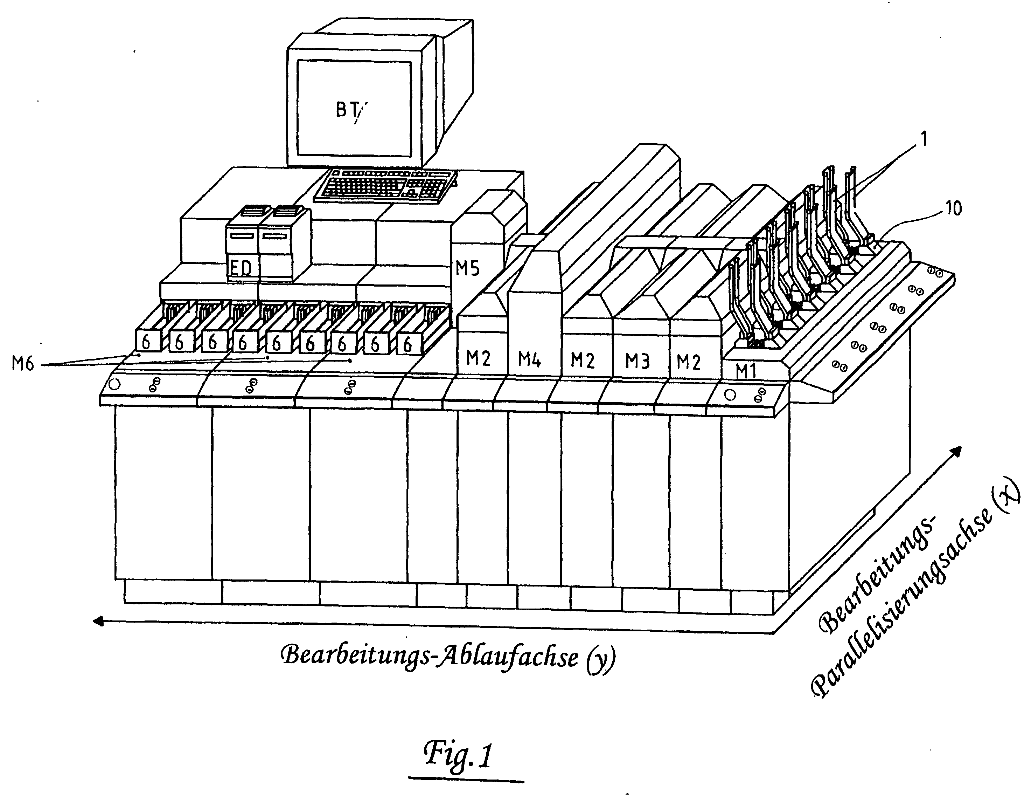

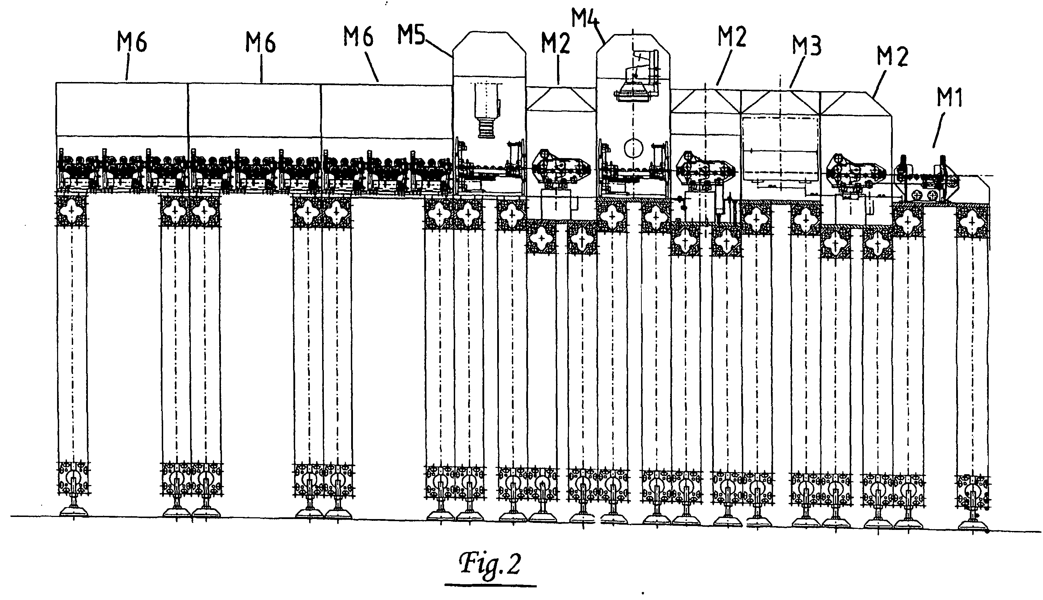

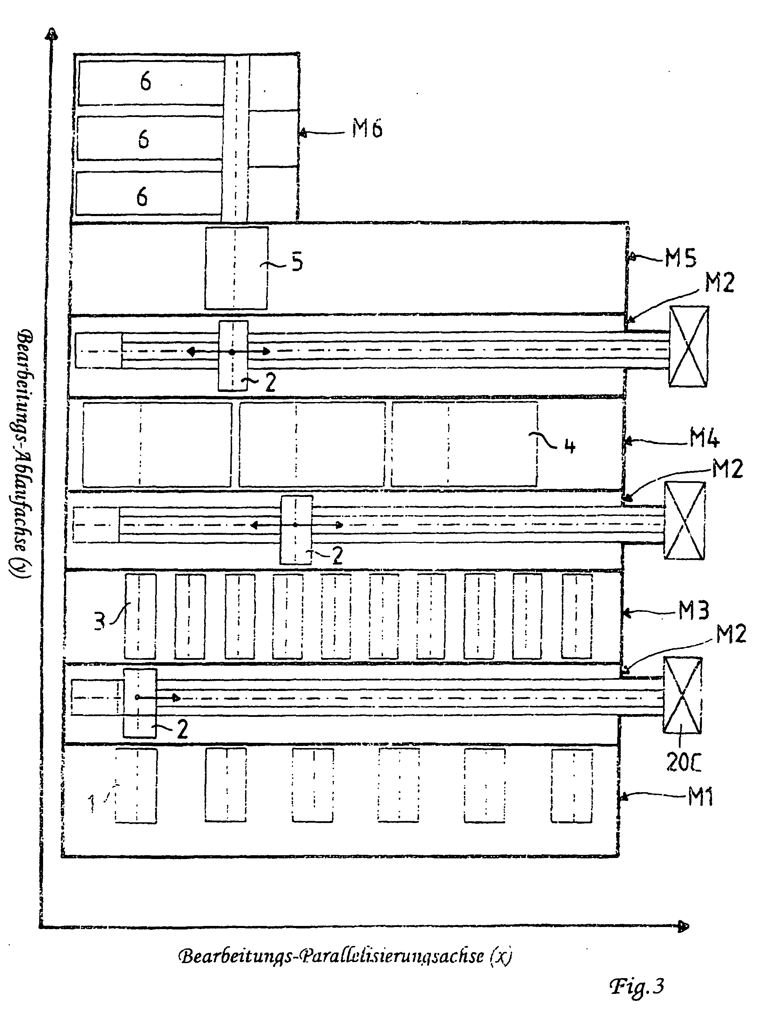

Zum besseren Verständnis soll die Anlage insgesamt kurz erläutert werden. Fig. 1, Fig. 2 und Fig. 3 zeigen den modularen Aufbau der Anlage. Um einen möglichst hohen Kartendurchsatz zu erzielen, sind die Chip- und/oder Magnetstreifen-Bearbeitungsstation (3) und die Laserbeschriftungsstation (4) mehrfach ausgeführt (Siehe auch EP 863481). Da die Chip- und/oder Magnetstreifen-Bearbeitung wesentlich mehr Zeit beansprucht als die Laserbeschriftung sind zahlenmäßig mehr Chip- und/oder Magnetstreifen-Bearbeitungsstationen (3) als Laserbeschriftungsstationen (4) vorhanden. Die mehrfach ausgeführten Bearbeitungsstationen (3,4) sind entlang der Bearbeitungs-Parallelisierungsachse (x) parallel nebeneinander angeordnet und jeweils in einem Bearbeitungsmodul (M3,M4) konstruktiv zusammengefaßt. Ebenso sind die Kartenvorratsmagazine (1) mehrfach vorhanden und bilden ein Kartenvorratsmodul (M1). Zwischen den einzelnen Bearbeitungsmodulen (M1,M3,M4) befindet sich jeweils ein Kartenverteilmodul (M2) mit einer Kartenverteilvorrichtung (2), die die zu bearbeitenden Karten von den Kartenvorratsmagazinen (1) zu den Bearbeitungsstationen (3,4) und von diesen wieder weiter transportiert. Hinter dem Laserbeschriftungsmodul (M4) befindet sich das Bilderkennungsmodul (M5), in dem die optische Erkennungsstation (5) untergebracht ist. Hinter dem Bilderkennungsmodul (M5) befindet sich ein Kartenablagemodul (M6) mit drei Ablagemagazinen (6), von denen wahlweise eines als Ausschußmagazin für die Aufnahme von als fehlerhaft aussortierten Karten dient.

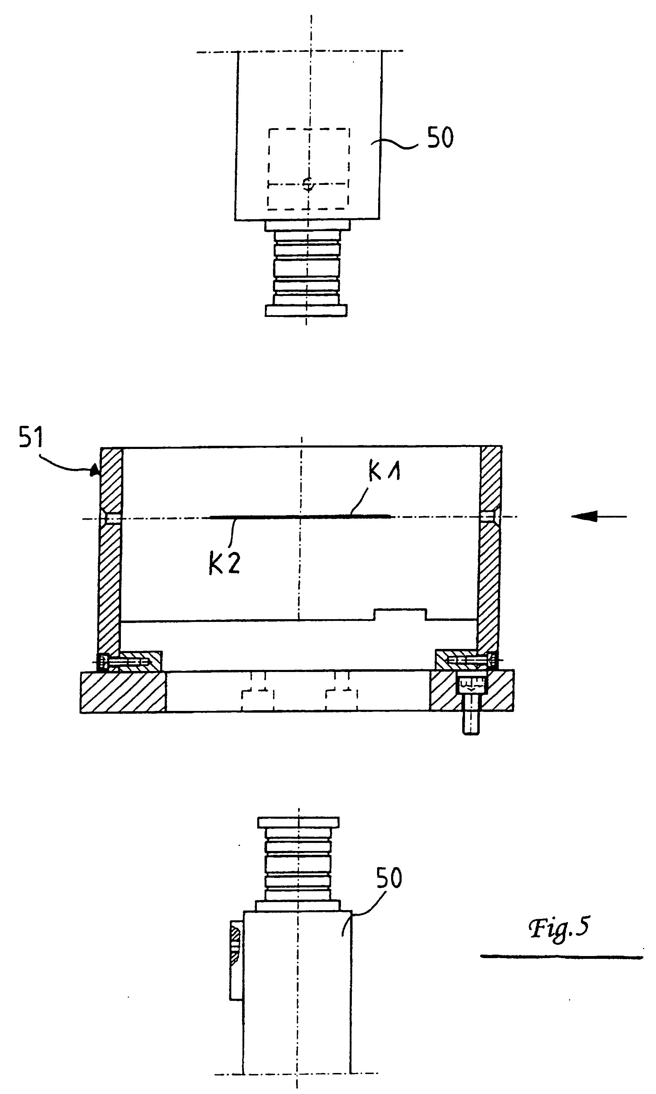

In Fig.5 ist die optische Erkennungsstation (5) schematisch gezeigt. Während der Bildaufnahme durch die Kameras (50) ist die Karte (K) in einer speziellen Transport-und Positioniervorrichtung (51), die den Kameras (50) einen vollkommen unverdeckten Blick auf die Kartenvorderseite (K1) und auf die Kartenrückseite (K2) gestattet, gehalten. Während der Bildaufnahme ruht die Karte vorzugsweise, damit keine Verzerungen enststehen. Jedoch ist es beim Einsatz von Kameras (50) mit kleinen Belichtungszeiten im Vgl. zur Kartentransportzeit auch vorgesehen, die Karte während der Bildaufnahme weiterzutransportieren, um Zeit einzusparen.

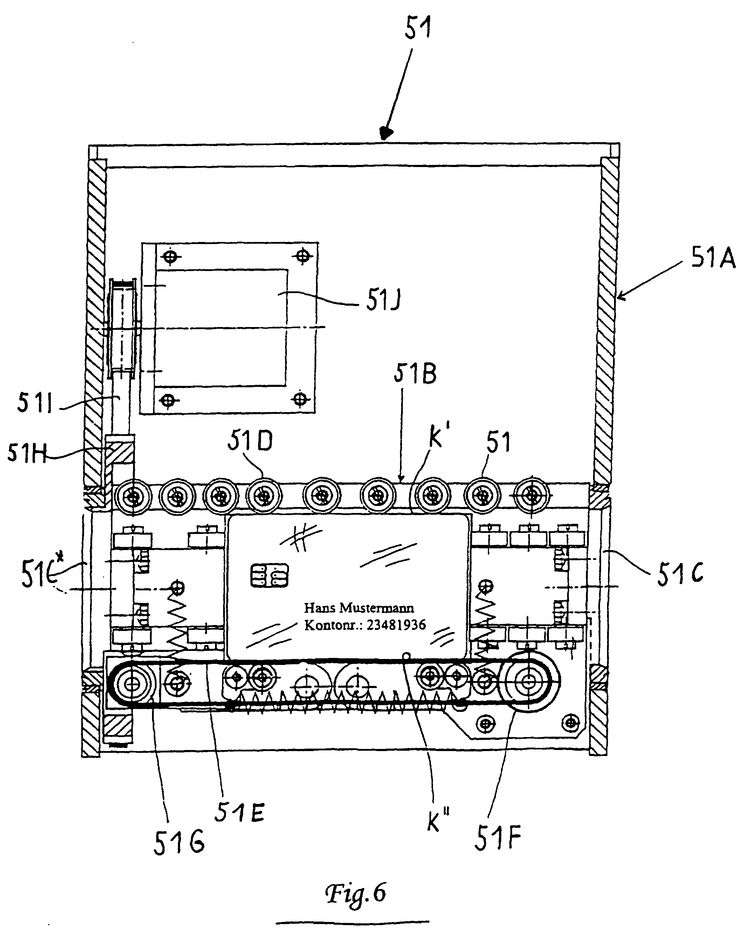

In Fig. 6 ist eine Draufsicht auf die Transport-und Positioniervorrichtung (51), die es gestattet, die Karte während der Bildaufnahme so zu positionieren, daß der Blick auf die Kartenvorderseite und die Kartenrückseite vollkommen unverdeckt ist. Die Transport- und Positionierungvorrichtung (51) weist einen in einem Gehäuse (51A) gehaltenen Montagerahmen (51B) mit einem Einführschlitz (51C) und einem diesem fluchtend gegenüberliegenden Ausgabeschlitz (51C*) auf. In Kartentransportrichtung/Bearbeitungsablaufrichtung (y) hinter dem Einführschlitz (51C) ist eine Eingangszentriereinrichtung und vor dem Ausgabeschlitz (51C*) ist eine Ausgangszentriereinrichtung jeweils zur Zentrierung der Karten auf die Kartentransportebene (x,y) angeordnet. Das unverdeckte Sichtfenster befindet sich zwischen der Eingangszentriereinrichtung und der Ausgangszentriereinrichtung. Zwischen dem Einführschlitz (51C) und dem Ausgabeschlitz (51C*) und parallel zur Kartentransportrichtung befindet sich eine Reihe von nebeneinander am Montagerahmen (51B) drehbar gelagerten Führungsrollen (51D) für die Karten, deren Drehachsen senkrecht zur Kartentransportebene (x,y) verlaufen. Den Führungsrollen (51D) beabstandet gegenüberliegend ist an dem Montagerahmen (51B) ein sich über die ca. die Länge der Führungsrollen-Reihe (51D) erstreckender Transportriemen (51E) angeordnet, der zwischen einer motorisch angetriebenen Antriebsrolle (51F) und einer Abtriebsrolle (51G), deren Drehachsen senkrecht zur Kartentransportebene (x,y) verlaufen, umläuft. Dabei sind die Karten (K) zum Transport und zur Positionierung mit ihren beiden Längsseiten (K',K") seitlich zwischen den Führungsrollen (51D) und dem Transportriemen (51E) unter einem Anpreßdruck gehalten. Dadurch, daß die Karten nur seitlich gehalten sind, wird der Blick auf die Kartenseiten nicht verdeckt - auch nicht in den Randbereichen.

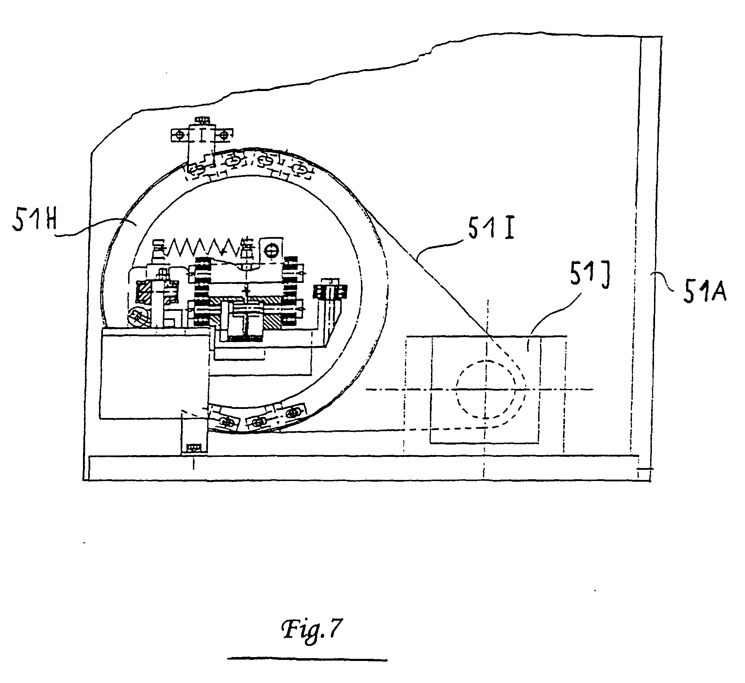

Falls es erforderlich ist, die Kartenvorderseite und die Kartenrückseite zu überprüfen, jedoch nur eine Kamera (50) eingesetzt werden soll, so wird eine Transport- und Positioniervorrichtung (51) der oben beschriebenen Art eingesetzt, die ein Wenden der Karte (K) um 180⁰ gestattet. Zu diesem Zweck - vgl. Fig. 7 - ist der Montagerahmen (51B) in dem Gehäuse (51A) der Transport-und Positioniervorrichtung (51) um eine Achse parallel zur Kartentransportrichtung (y) drehbar gelagert. Dabei ist an dem Montagerahmen (51B) koaxial eine Drehscheibe (51H) montiert, die form-und/oder kraftschlüssig über einen Antriebsriemen (51I) mit einem Antriebsmotor (51J) verbunden ist.

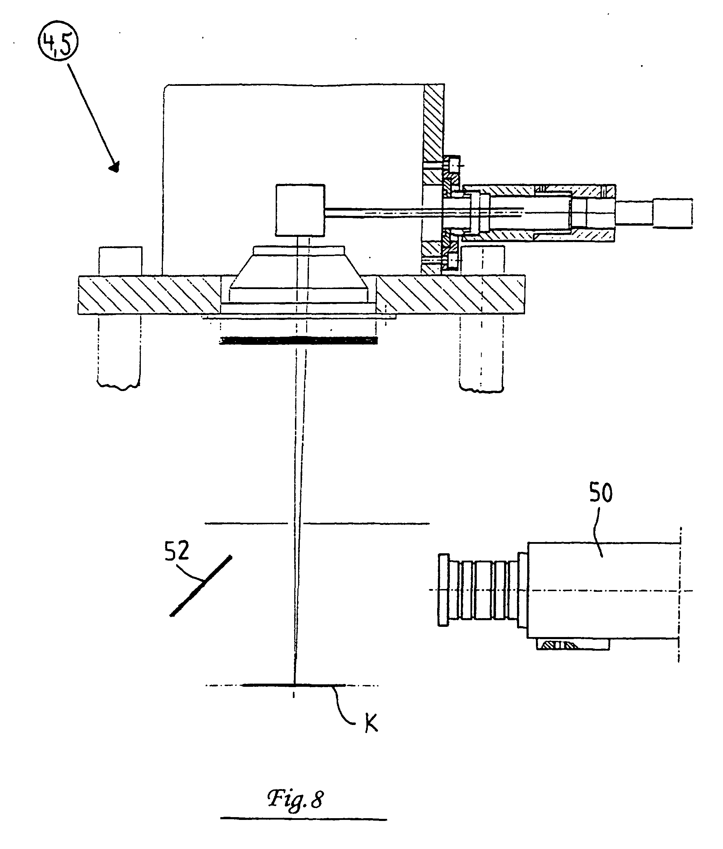

In Fig.8 ist eine Laserbeschriftungsstation mit integrierter optischer Erkennungsstation gezeigt. Dabei ist der Blick der Kamera (50) über einen Spiegel (52) indirekt auf die zu überprüfende Kartenseite (K1) gerichtet, damit die Kamera (50) nicht den Laserstrahlengang blockiert. Eine alternative Möglichkeit (nicht dargestellt) der Integration von Laserbeschriftung und optischer Erkennung ergibt sich beim Einsatz der oben erwähnten Transport- und Positioniervorrichtung (51; mit Wendeoption) in der Laserbeschriftungsstation (4). Die Kamera blickt dabei jeweils auf die Rückseite der laserbeschrifteten Karten. Zur Überprüfung muß die Karte gewendet werden.

Falls auf die Karten ein Barcode aufgelasert wird, so wird die Kamera vorzugsweise um ein Barcodelesegerät ergänzt.

## Patentansprüche

1. Anlage zur Bearbeitung von Chip-und/oder Magnetstreifenkarten (K), bestehend aus
- mindestens einem Kartenvorratsmagazin (1) zur Aufnahme von zu bearbeitenden Karten,
- mindestens einer Chip-und/oder Magnetstreifen-Bearbeitungsstation (3) zum Aufbringen von Daten auf den Chip und/oder auf den Magnetstreifen der Karten, wobei in der Bearbeitungsstation Mittel zur Überprüfung der Richtigkeit der hier aufgezeichneten Daten und zum Aussortieren von Karten mit fehlerhaft aufgezeichneten Daten vorhanden sind,
- mindestens einer Kartenkörper-Bearbeitungsstation (4) zum Aufbringen von sichtbaren, nicht änderbaren Daten auf den Kartenkörper,
- eine optische Erkennungsstation (5) mit einer Auswerteeinheit zur Überprüfung der Richtigkeit und/oder Qualität der auf den Kartenkörper aufgebrachten Daten Mittel zur Aussonderung von, wobei Karten mit falsch oder mangelhaft aufgebrachten, sichtbaren Daten als Fehlerkarten vorhanden sind,
**dadurch gekennzeichnet, daß**
daß die optische Erkennungsstation (5) eine Vorrichtung (51) zum Transport und zur Positionierung der zu überprüfenden Karten (K) aufweist, die ein vollkommen unverdecktes Sichtfenster auf die Karte gewährleistet, wobei die Transport- und Positionierungvorrichtung (51)
- einen in einem Gehäuse (51A) gehaltenen Montagerahmen (51B) mit einem Einführschlitz (51C) und einem diesem fluchtend gegenüberliegenden Ausgabeschlitz (51C*) aufweist, und
- in Kartentransportrichtung/Bearbeitungsablaufrichtung (y) hinter dem Einführschlitz (51C) eine Eingangszentriereinrichtung und vor dem Ausgabeschlitz (51C*) eine Ausgangszentriereinrichtung jeweils zur Zentrierung der Karten auf die Kartentransportebene (x,y) aufweist, und das unverdeckte Sichtfenster zwischen der Eingangszentriereinrichtung und der Ausgangszentriereinrichtung angeordnet ist und
- zwischen dem Einführschlitz (51C) und dem Ausgabeschlitz (51C*) und parallel zur Kartentransportrichtung eine Reihe von nebeneinander am Montagerahmen (51B) drehbar gelagerte Führungsrollen (51D) für die Karten aufweist, deren Drehachsen senkrecht zur Kartentransportebene (x,y) verlaufen und
- den Führungsrollen (51D) beabstandet gegenüberliegend, einen sich über die Länge der Führungsrollen-Reihe (51D) erstreckender Transportriemen (51E) aufweist, der zwischen einer motorisch angetriebenen Antriebsrolle (51F) und einer Abtriebsrolle (51G), deren Drehachsen senkrecht zur Kartentransportebene (x,y) verlaufen, umläuft, wobei die Karten (K) zum Transport und zur Positionierung mit ihren beiden Längsseiten (K',K'')seitlich zwischen den Führungsrollen (51D) und dem Transportriemen (51E) unter einem Anpreßdruck gehalten sind.

2. Anlage nach Anspruch 1,
**dadurch gekennzeichnet, daß**
die optische Erkennungsstation (5) eine Kamera (50) aufweist, die auf die Kartenvorderseite (K1) gerichtet ist, und eine zweite Kamera (50) aufweist, die auf die Kartenrückseite (K2) gerichtet ist.

3. Anlage nach Anspruch 1,
**dadurch gekennzeichnet, daß**
die optische Erkennungsstation (5) nur eine oberhalb oder unterhalb der Transport- und Positioniervorrichtung (51) angeordnete Kamera (50) aufweist, wobei
der Montagerahmen (51B) der Transport- und Positioniervorrichtung (51) mit dem Einführschlitz (51C) dem Ausgabeschlitz (51C*), den Führungsrollen (51D) und dem Transportiemen (51E) in dem Gehäuse (51A) um eine Achse parallel zur Kartentransportrichtung um 180⁰ drehbar gelagert ist, und die Karte zur Überprüfung der Rückseite gewendet wird.

4. Anlage nach einem der vorstehenden Ansprüche,
**dadurch gekennzeichnet, daß**
die optische Erkennungsstation (5) in Bearbeitungs-Ablaufrichtung (y) hinter der letzten Kartenkörper-Bearbeitungsstation angeordnet ist.

5. Anlage nach einem der Ansprüche 1 bis 4,
**dadurch gekennzeichnet, daß**
bei mehreren Kartenkörper-Bearbeitungsstationen unterschiedlichen Typs eine optische Erkennungsstation (5) in Bearbeitungs-Ablaufrichtung (y) hinter jeder dieser Kartenkörper-Bearbeitungsstation angeordnet ist.

6. Anlage nach einem der vorstehenden Ansprüche 1 bis 5,
**dadurch gekennzeichnet, daß**
die optische Erkennungsstation (5) in der Kartenkörper-Bearbeitungsstation (4) integriert ist.

7. Anlage nach Anspruch 6,
**dadurch gekennzeichnet, daß**
die optische Erkennung indirekt über einen Spiegel (52) erfolgt.

8. Anlage nach einem der vorstehenden Ansprüche,
**dadurch gekennzeichnet, daß**
die optische Erkennungsstation ein Barcode-Lesegerät umfaßt.

9. Anlage nach einem der vorstehenden Ansprüche,
**dadurch gekennzeichnet, daß**
die optische Erkennungsstation (5) mindstens eine CCD-Kamera (50) mit einer Bildauswerteeinrichtung aufweist.

## Claims

1. System for processing chip- and/or magnetic-strip cards (K), consisting of
- at least one card-stock magazine (1) for receiving cards to be processed,
- at least one chip- and/or magnetic strip-processing station (3) for applying the data to the chip and/or to the magnetic strip of the cards,
in which, in the processing station, there are means of checking the correctness of the data recorded here and for rejecting cards with wrongly recorded data,
- at least one card body-processing station (4) for applying visible, non-modifiable data to the card body,
- an optical recognition station (5) with an evaluation unit for checking the correctness and/or quality of the data applied to the card body, there being means for the rejection of cards with wrongly or insufficiently applied visible data,
**characterized in that**
the optical recognition station (5) has a device (51) for transporting and positioning the cards to be checked, which guarantees a completely unmasked inspection window onto the card by the transport and positioning device (51)
- having a mounting frame (51B), held in a housing (51A), with a feed slot (51C) and a delivery slot (51C*) aligned opposite to this, and
- having, in card-transport direction/processing-sequence direction (y) behind the feed slot (51C), an entry-centring device and in front of the delivery slot (51C*) an exit-centring device, each for centring the cards onto the card-transport plane (x,y) and the unmasked inspection window being arranged between the entry-centring device and the exit-centring device and
- having, between the feed slot (51C) and the delivery slot (51C*) and parallel to the card-transport direction, a row of guide rolls (51D) housed rotatable one next to the other on the mounting frame (51B) for the cards, their rotation axes running perpendicular to the card-transport plane (x,y), and
- having, lying at a distance opposite the guide rolls (51), a transport belt (51E), extending over the length of the row of guide rolls (51D), which circulates between a motor-driven driving roll (51F) and a driven roll (51G), whose rotation axes run perpendicular to the card-transport plane (x,y), the cards (K) being held, for transport and for positioning, laterally by their two long sides (K',K") under a contact pressure between the guide rolls (51D) and the transport belt (51E).

2. System according to claim 1,
**characterized in that**
the optical recognition station (5) has a camera (50), which is aligned with the front of the card (K1), and a second camera (50), which is aligned with the back of the card (K2).

3. System according to claim 1,
**characterized in that**
the optical recognition station (5) has only a camera (50) arranged above or below the transport and positioning device (51), the mounting frame (51B) of the transport and positioning device (51) with the feed slot (51C) the delivery slot (51C*), the guide rolls (51D) and the transport belt (51E) in the housing (51A) being housed rotatable by 180° about an axis parallel to the card-transport direction, and the card being turned to check the back.

4. System according to one of the previous claims,
**characterized in that**
the optical recognition station (5) is arranged behind the last card body-processing station in processing-sequence direction (y).

5. System according to one of claims 1 to 4,
**characterized in that**
when there are several card-body processing stations of different types, an optical recognition station (5) is arranged in processing-sequence direction (y) behind each of these card body-processing stations.

6. System according to one of the previous claim 1 to 5,
**characterized in that**
the optical recognition station (5) is integrated into the card body-processing station (4).

7. System according to claim 1,
**characterized in that**
optical recognition takes place indirectly via a mirror (52).

8. System according to one of the previous claims,
**characterized in that**
the optical recognition station comprises a bar-code reader.

9. System according to one of the previous claims,
**characterized in that**
the optical recognition station (5) has at least one CCD camera (50) with an image-evaluation device.

## Revendications

1. Installation pour le traitement de cartes (K) à puce ou à bande magnétique comprenant
- au moins un magasin de stockage de cartes (1) pour recevoir des cartes à traiter,
- au moins un poste de traitement de puces et / ou de bandes magnétiques (3) pour l'application de données sur la puce ou sur la bande magnétique des cartes,
des moyens de contrôle de l'exactitude des données y inscrites et pour le triage de cartes portant des données erronées étant prévus dans le poste de traitement,
- au moins un poste de traitement de corps de cartes (4) pour l'application de données visibles, non modifiables sur le corps des cartes,
- un poste de détection optique (5) avec une unité d'évaluation pour le contrôle de l'exactitude et / ou de la qualité des données appliquées sur le corps des cartes, des moyens de mise au rebut de cartes portant des données visibles, erronées ou médiocrement appliquées, étant prévus,
**caractérisée en ce que**
le poste de détection optique (5) présente un dispositif (51) pour le transport et le positionnement des cartes (K) à contrôler, qui assure une fenêtre d'inspection complètement découverte avec regard sur la carte, le dispositif de transport et de positionnement (51)
- présentant un cadre de montage (51B), maintenu dans un boîtier (51A), avec une fente d'introduction (51C) et une fente de sortie (51C*), située vis-à-vis, en alignement, de celle-ci, et
- présentant, dans la direction de transport des cartes / la direction d'évolution du traitement (y), en aval de la fente d'introduction (51C), un dispositif de centrage d'introduction, et, en amont de la fente de sortie (51C*), un dispositif de centrage de sortie, destinés chacun au centrage des cartes sur le plan de transport de cartes (x, y), et la fenêtre d'inspection non recouverte, étant disposée entre le dispositif de centrage d'introduction et le dispositif de centrage de sortie, et,
- présentant, entre la fente d'introduction (51C) et le fente de sortie (51C*), et parallèlement à la direction de transport de cartes, une rangée de rouleaux de guidage de cartes (51D), montés en pivotement, les uns à côtés des autres, au cadre de montage (51B), dont les axes de rotation sont orientés parallèlement au plan de transport de cartes (x, y), et
- présentant, vis-à-vis des rouleaux de guidage (51D), à distance de ceux-ci, une courroie de transport (51E) qui s'étend sur la longueur de la rangée de rouleaux de guidage (51D), laquelle courroie circule entre un rouleau de commande (51F), entraîné par moteur, et rouleau de sortie (51G), dont les axes de rotation s'étendent perpendiculairement au plan de transport de cartes (x, y), les cartes (K) étant, pour le transport et le positionnement, maintenues, par leurs deux côtés longitudinaux (K', K"), latéralement entre les rouleaux de guidage (51D) et la courroie de transport (51E), sous l'effet d'une pression.

2. Installation selon la revendication 1,
**caractérisée en ce que**
le poste de détection optique (5) présente une caméra (50) qui est dirigée sur la face avant (K1) de la carte, et une deuxième caméra (50) qui est dirigée sur la face arrière (K2) de la carte.

3. Installation selon la revendication 1,
**caractérisée en ce que**
le poste de détection optique (5) ne présente qu'une caméra (50), disposée au-dessus ou au-dessous du dispositif de transport et de positionnement (51),
le cadre de montage (51B) du dispositif de transport et de positionnement (51), avec la fente d'introduction (51C), la fente de sortie (51C*), les rouleaux de guidage (51D) et la courroie de transport (51E) étant monté, dans le boîtier (51A), sur un axe, en rotation de 180°, parallèlement à la direction de transport de cartes, et le carte étant retournée pour le contrôle de la face arrière.

4. Installation selon l'une des revendications précédentes,
**caractérisée en ce que**
le poste de détection optique (5) est disposé, dans la direction d'évolution de traitement (y), en aval du dernier poste de traitement de corps de cartes.

5. Installation selon l'une des revendications 1 à 4,
**caractérisée en ce que**,
lors de plusieurs postes de traitement de corps de cartes de types différents, un poste de détection optique (5) est disposé, dans la direction d'évolution de traitement (y), en aval de chacun de ces postes de traitement de corps de cartes.

6. Installation selon l'une des revendications 1 à 5,
**caractérisée en ce que**
le poste de détection optique (5) est intégré dans le poste de traitement de corps de cartes (4).

7. Installation selon la revendication 6,
**caractérisée en ce que**
la détection optique est effectuée indirectement par l'intermédiaire d'un miroir (52).

8. Installation selon l'une des revendications précédentes,
**caractérisée en ce que**
le poste de détection optique comprend un lecteur de code à barres.

9. Installation selon l'une des revendications précédentes,
**caractérisée en ce que**
le poste de détection optique (5) présente au moins une caméra CCD (50) avec un dispositif d'évaluation d'images.
